# EUROPÄISCHE PATENTSCHRIFT

(11) **EP 3 083 362 B1**
(45) Veröffentlichungstag und Bekanntmachung des Hinweises auf die Patenterteilung: **25.10.2017**
(21) Anmeldenummer: 14821069.3
(22) Anmeldetag: 16.12.2014
(51) Int. Cl.: B60W 50/00, B60W 40/08, B60R 21/015

(54) **VERFAHREN UND SYSTEM ZUM BETREIBEN EINES KRAFTWAGENS**
METHOD AND SYSTEM FOR OPERATING A MOTOR VEHICLE
PROCÉDÉ ET SYSTÈME POUR FAIRE FONCTIONNER UN VÉHICULE À MOTEUR

(30) Priorität: 20.12.2013 DE 102013021812
(43) Veröffentlichungstag der Anmeldung: 26.10.2016
(73) Patentinhaber: Audi AG, 85045 Ingolstadt (DE)
(72) Erfinder: KÜHNE, Marcus, 92331 Beilngries (DE); MÜLLER, Ulrich, 85055 Ingolstadt (DE)
(86) Internationale Anmeldenummer: PCT/EP2014/003381
(87) Internationale Veröffentlichungsnummer: WO 2015/090570

(56) Entgegenhaltungen:
- EP-A2- 1 842 735
- US-A- 5 927 752
- US-A1- 2003 135 346
- US-A1- 2004 151 366

## Beschreibung

Die Erfindung betrifft ein Verfahren und System zum Betreiben eines Kraftwagens der in den Oberbegriffen der unabhängigen Patentansprüche angegebenen Art.

Die DE 102 57 963 A1 zeigt ein Verfahren zur Bestimmung der Positionierung eines Fahrzeuginsassen in einem Kraftwagen. Mit Hilfe eines optischen Sensors wird eine Kopfposition des Fahrzeuginsassen erfasst, wobei unter Berücksichtigung eines bereitgestellten anthropometrischen Modells eine Einstellung einer Kopfstütze des Kraftwagens erfolgt.

Die DE 10 2007 023 141 A1 zeigt ein Verfahren zur Einstellung eines Komfort- und/oder Sicherheitssystems in einem Kraftfahrzeug. Mittels einer Bilderfassungseinheit wird eine Kopfposition eines Fahrzeuginsassen erfasst und in Abhängigkeit davon wird ein Komfort- und/oder Sicherheitssystem des Kraftfahrzeugs entsprechend eingestellt.

Die DE 10 2008 018 397 A1 zeigt ein Verfahren zur Regelung einer Klimaanlage eines Kraftfahrzeugs. Die Ausrichtung einer Luftaustrittsdüse der Klimaanlage wird dabei anhand einer erfassten Kopfposition eines Fahrzeuginsassen verändert.

Die DE 103 08 413 A1 zeigt ein Verfahren zur Steuerung einer Heiz-Klima-Einrichtung eines Kraftwagens. Die Einstellung der Heiz-Klima-Einrichtung erfolgt dabei in Abhängigkeit einer erfassten Kopfposition eines Fahrzeuginsassen.

Die US 2006/0253241 A1 zeigt ein Verfahren zur Einstellung eines Fahrzeugsitzes eines Kraftwagens. Die Einstellung des Fahrzeugsitzes erfolgt dabei in Abhängigkeit einer mit einer Time-of-flight-Kamera erfassten Kopfposition eines Fahrzeuginsassen.

Die EP 1 842 735 A2 zeigt ein Objekterkennungssystem zum Detektieren von Informationen über Objekte auf Fahrzeugsitzen durch Verwenden einer Kamera.

Die US 5 927 752 A zeigt ein Verfahren, bei welchem eine Airbagansteuerung parametrisiert wird. Eine Augenposition eines Fahrzeuginsassen wird mittels Sensoren erfasst. Basierend auf anthropometrischen Informationen werden zudem Körperparameter des Fahrzeuginsassen bestimmt. In Abhängigkeit von der ermittelten Augenposition und den Körperparametern werden Parameter, welche eine Befüllung eines Airbags betreffen, bestimmt.

Es ist die Aufgabe der vorliegenden Erfindung, eine verbesserte fahrzeuginsassenindividuelle Anpassung von Funktionseinheiten eines Kraftwagens zu ermöglichen.

Diese Aufgabe wird durch ein Verfahren sowie durch ein System zum Betreiben eines Kraftwagens mit den Merkmalen der unabhängigen Patentsprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Betreiben eines Kraftwagens wird eine Raumlage von zumindest einer ersten in einem Erfassungsbereich einer Erfassungseinrichtung des Kraftwagens angeordneten Körperpartie eines Fahrzeuginsassen gegenüber dem Kraftwagen mittels der Erfassungseinrichtung erfasst. Des Weiteren wird ein anthropometrisches Datenmodell bereitgestellt, welches Daten bezüglich der Abmaße von vorbestimmten Körperpartien eines Menschen und der Positionierung der Körperpartien zueinander umfasst. Das erfindungsgemäße Verfahren zeichnet sich dadurch aus, dass eine Raumlage von zumindest einer zweiten Körperpartie desselben Fahrzeuginsassen ermittelt wird, welche außerhalb des Erfassungsbereichs der Erfassungseinrichtung angeordnet ist, wobei dies unter Berücksichtigung der erfassten Raumlage der ersten Körperpartie und des anthropometrischen Datenmodells erfolgt. Des Weiteren ist es erfindungsgemäß vorgesehen, dass zumindest eine Funktionseinheit des Kraftwagens unter Berücksichtigung der ermittelten Raumlage der zweiten Körperpartie angesteuert wird.

Der Erfindung liegt dabei die Erkenntnis zugrunde, dass Erfassungseinrichtungen in Kraftwagen, welche zur Erfassung der Raumlage oder Positionierung von Körperpartien von Fahrzeuginsassen dienen, üblicherweise nur einen beschränkten Erfassungsbereich aufweisen. Ist beispielsweise eine derartige Erfassungseinrichtung, bei welcher es sich zum Beispiel um ein Kamerasystem oder dergleichen handeln kann, im Bereich eines Dachhimmels eines Kraftwagens angeordnet, kann es sein, dass gewisse Körperpartien eines Fahrzeuginsassen gar nicht im Erfassungsbereich der Erfassungseinrichtung liegen und somit deren Position und Raumlage gar nicht erfasst werden kann. Durch die erfindungsgemäße Lösung, anhand einer im Erfassungsbereich liegenden Körperpartie in Kombination mit einem bereitgestellten anthropometrischen Datenmodell auf die Raumlage von zumindest einer zweiten Körperpartie desselben Fahrzeuginsassen zu schließen, welche außerhalb des Erfassungsbereichs der Erfassungseinrichtung liegt, ist es möglich, im Wesentlichen die Raumlage sämtlicher Körperpartien eines Fahrzeuginsassen zu erfassen, also auch von denjenigen, welche außerhalb des Erfassungsbereichs der Erfassungseinrichtung liegen. Dadurch kann eine besonders akkurate Ansteuerung und Einstellung von unterschiedlichsten Funktionseinheiten des Kraftwagens unter Berücksichtigung von nicht im Erfassungsbereich liegenden Körperpartien erfolgen, mittels welchen beispielsweise der Komfort oder auch die Sicherheit eines Fahrzeuginsassen gesteigert werden kann.

Erfindungsgemäß ist es vorgesehen, dass eine Raumlage einer in dem Erfassungsbereich angeordneten ersten Schulter des Fahrzeuginsassen erfasst und unter Berücksichtigung der erfassten Raumlage der ersten Schulter sowie des anthropometrischen Datenmodells eine Raumlage einer zweiten Schulter des Fahrzeuginsassen ermittelt wird. Dabei wird eine Höhenverstellungseinrichtung eines Anschnallgurtes des Kraftwagens unter Berücksichtigung der ermittelten Raumlage der zweiten Schulter automatisch angesteuert. Dadurch ist es möglich, einen Anschnallgurt auf einen betreffenden Fahrzeuginsassen optimal einzustellen, selbst wenn die für die Höheneinstellung des Anschnallgurts relevante Schulter außerhalb des Erfassungsbereichs der Erfassungseinrichtung liegen sollte. Dadurch kann eine optimale Zurückhaltung des Fahrzeuginsassen durch die optimierte Höheneinstellung des Anschnallgurts gewährleistet werden. Verletzungen durch nicht korrekt eingestellte Anschnallgurte können dadurch vermieden werden.

Weiterhin ist erfindungsgemäß vorgesehen, zusätzlich oder alternativ eine Raumlage eines Kopfes des Fahrzeuginsassen ermittelt wird. Mit anderen Worten kann also auch die Raumlage des Kopfes des Fahrzeuginsassen ermittelt werden, selbst wenn der Kopf außerhalb des Erfassungsbereichs der Erfassungseinrichtung liegen sollte.

Dabei ist es vorgesehen, dass eine Klimaanlage des Kraftwagens unter Berücksichtigung der ermittelten Raumlage des Kopfes automatisch parametrisiert wird. Beispielsweise kann eine Temperatur- und/oder Strömungsgeschwindigkeitsverteilung der Klimaanlage parametrisiert werden. Somit kann fahrzeuginsassen-individuell unter Kenntnis der Raumlage beziehungsweise der Position des Kopfes der betreffenden Fahrzeuginsassen eine optimierte Einstellung beziehungsweise Ansteuerung der Klimaanlage erfolgen, so dass eine besonders angenehme und zugluftfreie Temperierung des Fahrzeuginnenraums erfolgen kann.

Weiterhin ist zusätzlich oder alternativ vorgesehen, dass eine Höhenverstellungseinrichtung einer Kopfstütze des Kraftwagens automatisch unter Berücksichtigung der ermittelten Raumlage des Kopfes angesteuert wird. Es ist also auch möglich, selbst wenn der Kopf des betreffenden Fahrzeuginsassen außerhalb des Erfassungsbereichs der Erfassungseinrichtung liegen sollte, die Kopfposition trotzdem in der bereits beschriebenen Weise zu ermitteln und die Kopfstütze beziehungsweise die Höheneinstellung der Kopfstütze passend für den entsprechenden Fahrzeuginsassen einzustellen, wodurch die Verletzungsgefahr bei Unfällen für den Fahrzeuginsassen erheblich verringert werden kann.

Vorzugsweise wird eine Auslösung eines Airbags, insbesondere eines Kopfairbags, unter Berücksichtigung der ermittelten Raumlage des Kopfes parametrisiert. Beispielsweise kann der Airbag unter Berücksichtigung der ermittelten Raumlage des Kopfes verzögert gegenüber einer Standardeinstellung ausgelöst oder gar nicht ausgelöst werden. Zum Beispiel kann es vorkommen, dass der betreffende Fahrzeuginsasse sich gerade in Richtung eines Kopfairbags gebeugt hat, so dass eine Auslösung des Airbags in einer Unfallsituation gegebenenfalls zu starken Verletzungen des Kopfes des Fahrzeuginsassen führen würde. Durch die permanente Ermittlung der Kopfposition, selbst wenn der Kopf gar nicht im Erfassungsbereich der Erfassungseinrichtung liegt, können derartige Fälle vermieden werden, dadurch dass der Airbag unter Berücksichtigung der ermittelten Raumlage des Kopfes angepasst ausgelöst wird, falls dies sicherer für den betreffenden Fahrzeuginsassen sein sollte.

Das erfindungsgemäße System zum Betreiben eines Kraftwagens umfasst eine Erfassungseinrichtung, welche dazu ausgelegt ist, eine Raumlage von zumindest einer ersten in einem Erfassungsbereich der Erfassungseinrichtung angeordneten Körperpartie eines Fahrzeuginsassen gegenüber dem Kraftwagen zu ermitteln. Das System umfasst des Weiteren eine Speichereinrichtung, welche dazu ausgelegt ist, ein anthropometrisches Datenmodell, welchen Daten bezüglich der Abmaße von vorbestimmten Körperpartien eines Menschen und der Positionierung der Körperpartien umfasst, bereitzustellen. Das erfindungsgemäße System zeichnet sich dadurch aus, dass eine Datenverarbeitungseinrichtung des Systems dazu ausgelegt ist, eine Raumlage von zumindest einer zweiten Körperpartie desselben Fahrzeuginsassen, welche außerhalb des Erfassungsbereichs der Erfassungseinrichtung angeordnet ist, unter Berücksichtigung der erfassten Raumlage der ersten Körperpartie und des anthropometrischen Datenmodells zu ermitteln. Des Weiteren zeichnet sich das erfindungsgemäße System dadurch aus, dass eine Steuereinrichtung des Systems dazu ausgelegt ist, zumindest eine Funktionseinheit des Kraftwagens unter Berücksichtigung der ermittelten Raumlage der zweiten Körperpartie anzusteuern. Vorteilhafte Ausgestaltungen des erfindungsgemäßen Verfahrens sind als vorteilhafte Ausgestaltungen des erfindungsgemäßen Systems anzusehen, wobei das System insbesondere Mittel zur Durchführung der Verfahrensschritte umfasst.

Weitere Vorteile, Merkmale und Einzelheiten der Erfindung ergeben sich aus der nachfolgenden Beschreibung bevorzugter Ausführungsbeispiele sowie anhand der Zeichnung.

Die Zeichnung zeigt in:
- Fig. 1: eine schematische Darstellung eines Kraftwagens mit einem System zur Erfassung und Ermittlung von Körperpartien eines Fahrzeuginsassen und eine Steuereinrichtung zum Ansteuern unterschiedlicher Funktionseinheiten des Kraftwagens; und in
- Fig. 2: eine Perspektivansicht auf einen teilweise dargestellten Innenraum des Kraftwagens, wobei ein Fahrer des Kraftwagens gezeigt ist.

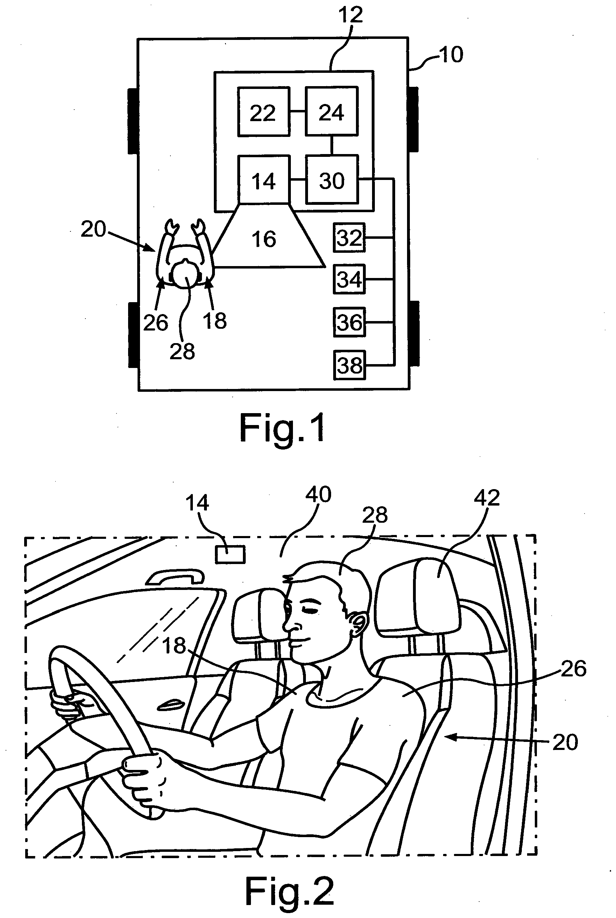

Ein Kraftwagen 10 mit einem System 12 zum Betreiben des Kraftwagens ist in einer schematischen Darstellung in Fig. 1 gezeigt. Das System 12 umfasst eine Erfassungseinrichtung 14, welche dazu ausgelegt ist, eine Raumlage von zumindest einer ersten in einem Erfassungsbereich 16 der Erfassungseinrichtung 14 angeordneten Körperpartie 18 eines Fahrzeuginsassen 20 zu ermitteln.

Im vorliegenden Fall handelt es sich bei der Körperpartie 18 um die rechte Schulter des Fahrzeuginsassen 20. Das System 12 umfasst des Weiteren eine Speichereinrichtung 22, welche dazu ausgelegt ist, ein anthropometrisches Datenmodell, welches Daten bezüglich der Abmaße von vorbestimmten Körperpartien eines Menschen und der Positionierung der Körperpartien zueinander umfasst, bereitzustellen. Darüber hinaus umfasst das System 12 eine Datenverarbeitungseinrichtung 24, welche dazu ausgelegt ist, eine Raumlage von zumindest einer zweiten Körperpartie 26, 28 desselben Fahrzeuginsassen 20, welche außerhalb des Erfassungsbereichs 16 der Erfassungseinrichtung 14 angeordnet ist, unter Berücksichtigung der erfassten Raumlage der ersten Körperpartie 18 und des anthropometrischen Datenmodells zu ermitteln.

Vorliegend handelt es sich bei den außerhalb des Erfassungsbereichs 16 liegenden Körperpartien 26, 28 um die linke Schulte beziehungsweise den Kopf des Fahrzeuginsassen 20. Schließlich umfasst das System 12 noch eine Steuereinrichtung 30, welche dazu ausgelegt ist, eine Mehrzahl von Funktionseinheiten 32, 34, 36, 38 des Kraftwagens 10 unter Berücksichtigung der ermittelten Raumlage der außerhalb des Erfassungsbereichs 16 liegenden Körperpartien 26, 28 anzusteuern.

Vorliegend handelt es sich bei der Funktionseinheit 32 um eine Höhenverstellungseinrichtung eines Anschnallgurtes des Kraftwagens 10. Bei der Funktionseinheit 34 handelt es sich um einen Kopfairbag, welcher im Bereich des Kopfes 28 des Fahrzeuginsassen 20 innerhalb des Kraftwagens 10 angeordnet ist. Bei der Funktionseinheit 36 handelt es sich um eine Klimaanlage des Kraftwagens 10. Und bei der Funktionseinheit 38 handelt es sich um eine Höhenverstellungseinrichtung einer Kopfstütze desjenigen Sitzes, in welchem der Fahrzeuginsasse 20 sitzt.

In Fig. 2 ist in einer Perspektivansicht ein Ausschnitt des Innenraums des Kraftwagens 10 dargestellt. Die Erfassungseinrichtung 14 ist im vorliegend gezeigten Fall in einem Dachhimmel 40 des Kraftwagens 10 angeordnet. Die Erfassungseinrichtung 14 weist dabei einen derartigen Erfassungsbereich 16 auf, dass die rechte Schulter 18 des Fahrzeuginsassen noch innerhalb des Erfassungsbereichs 16 liegt, wobei sowohl der Kopf 28 als auch die linke Schulter 26 außerhalb des Erfassungsbereichs 16 liegen.

Nachfolgend wird ein Verfahren zum Betreiben des Kraftwagens 10 näher erläutert. Zunächst wird eine Raumlage von der rechten Schulter 18 des Fahrzeuginsassen mittels der Erfassungseinrichtung 14 erfasst, was auch ohne Weiteres möglich ist, da die rechte Schulter 18, wie bereits erläutert, innerhalb des Erfassungsbereichs 16 der Erfassungseinrichtung 14 angeordnet ist. Des Weiteren wird das besagte anthropometrische Datenmodell mittels der Speichereinrichtung 22 bereitgestellt. Anschließend wird eine Raumlage von der linken Schulter 26 des Fahrzeuginsassen 20 ermittelt, welche außerhalb des Erfassungsbereichs der Erfassungseinrichtung 14 angeordnet ist. Dabei wird die erfasste Raumlage der rechten Schulter 18 und das bereitgestellte anthropometrische Datenmodell berücksichtigt. In Kenntnis der Raumlage beziehungsweise Position der rechten Schulter 18 kann die Raumlage und Position der linken Schulter 26 durch einen Abgleich mit dem anthropometrischen Datenmodell auf einfache Weise erfolgen, da aufgrund des anthropometrischen Datenmodells die Abmaße von vorbestimmten Körperpartien eines Menschen und die Positionierung der Körperpartien zueinander bekannt sind.

Anschließend wird die Höhenverstellungseinrichtung 32 des auf der Fahrerseite angeordneten Anschnallgurts des Kraftwagens 10 unter Berücksichtigung der ermittelten Raumlage der linken Schulter 26 automatisch angesteuert. Sollte beispielsweise die Höhenverstellungseinrichtung 32 nicht korrekt auf die Körpergröße und Sitzposition des Fahrzeuginsassen 20 eingestellt sein, wird die Höhenverstellungseinrichtung 32 entsprechend mittels der Steuerungseinrichtung 30 derart angesteuert, dass der Anschnallgurt optimal auf die Größe und Sitzposition des Fahrzeuginsassen 20 eingestellt wird.

Des Weiteren wird unter Berücksichtigung der erfassten Raumlage der rechten Schulter 18 und des bereitgestellten anthropometrischen Datenmodells eine Raumlage des Kopfes 28 des Fahrzeuginsassen 20 ermittelt. Sollte das Fahrzeug 10 in einen Unfall verwickelt werden, bei welchem üblicherweise der Kopfairbag 34 ausgelöst werden würde, wird die Auslösung des Kopfairbags 34 unter Berücksichtigung der ermittelten Raumlage des Kopfes 28 parametrisiert. Sollte beispielsweise die Kopfposition derart ungünstig sein, dass eine Auslösung des Kopfairbags 34 zu einer Verletzung des Fahrzeuginsassen 20 führen würde, kann der Kopfairbag 34 unter Berücksichtigung der ermittelten Raumlage des Kopfes 28 beispielsweise verzögert gegenüber einer Standardeinstellung ausgelöst oder gar nicht ausgelöst werden.

In Kenntnis der Kopfposition des Fahrzeuginsassen wird darüber hinaus die Klimaanlage 36 des Kraftwagens automatisch parametrisiert. Beispielsweise wird eine Temperatur- und/oder Strömungsgeschwindigkeitsverteilung der Klimaanlage derart parametrisiert, dass eine besonders zugluftfreie Klimatisierung des Fahrzeuginnenraums bei einer angenehmen Temperaturverteilung erzielt wird. Beispielsweise kann die Luftausströrngeschwindigkeit der Klimaanlage in Kenntnis der Kopfposition derart eingestellt werden, dass im Kopfbereich besonders geringe Strömungsgeschwindigkeiten im Fahrzeuginnenraum vorliegen.

Zudem wird die Höhenverstellungseinrichtung 38 der Kopfstütze 42 des Kraftwagens 10 automatisch unter Berücksichtigung der ermittelten Raumlage des Kopfes 28 angesteuert. Sollte die Kopfstütze 42 nicht in der richtigen Höhe eingestellt sein, steuert die Steuerungseinrichtung 30 die Höhenverstellungseinrichtung 38 der Kopfstütze 42 derart an, dass die Kopfstütze 42 in Anbetracht der ermittelten Kopfposition des Fahrzeuginsassen 20 optimal eingestellt wird, wodurch Schleudertraumata und ähnliche Verletzungen bei einem Unfall vermieden werden können.

Im vorliegend gezeigten Beispiel wurde das Einstellen beziehungsweise Parametrisieren unterschiedlichster Funktionseinheiten 32, 34, 36, 38 des Kraftwagens 10 unter Berücksichtigung der erfassten Positionen unterschiedlicher Körperpartien 18, 26, 38 des Fahrzeuginsassen 20 erläutert.

Das Verfahren kann dabei gleichermaßen für auf unterschiedlichen Positionen des Kraftwagens 10 sitzenden Fahrzeuginsassen in gleicher Weise durchgeführt werden. Insgesamt wird durch das erläuterte System 12 und Verfahren ermöglicht, die Positionierung unterschiedlichster Körperpartien von Fahrzeuginsassen eines Kraftwagens zu ermitteln, selbst wenn entsprechende Erfassungseinrichtungen nicht dazu geeignet sind, sämtliche Körperpartien der Fahrzeuginsassen zu erfassen. Durch die zuverlässige Erfassbarkeit der Raumlagen beziehungsweise Positionierungen unterschiedlichster Körperpartien von Fahrzeuginsassen ist es möglich, komfort- und sicherheitsrelevante Funktionseinheiten eines Kraftwagens automatisch und optimal auf die Körpergröße und Sitzposition von Fahrzeuginsassen einzustellen. Dadurch kann sowohl der Komfort für Fahrzeuginsassen also auch die Sicherheit von Fahrzeuginsassen in Kraftwagen erhöht werden.

## Patentansprüche

1. Verfahren zum Betreiben eines Kraftwagens (10), mit den Schritten:
- Erfassen einer Raumlage von zumindest einer ersten in einem Erfassungsbereich (16) einer Erfassungseinrichtung (14) des Kraftwagens (10) angeordneten Körperpartie (18) eines Fahrzeuginsassen (20) gegenüber dem Kraftwagen (10) mittels der Erfassungseinrichtung (14);
- Bereitstellen eines anthropometrischen Datenmodells, welches Daten bezüglich der Abmaße von vorbestimmten Körperpartien eines Menschen und der Positionierung der Körperpartien zueinander umfasst;
- Ermitteln einer Raumlage von zumindest einer zweiten Körperpartie (26, 28) desselben Fahrzeuginsassen (20), welche außerhalb des Erfassungsbereichs (16) der Erfassungseinrichtung (14) angeordnet ist, unter Berücksichtigung der erfassten Raumlage der ersten Körperpartie (18) und des anthropometrischen Datenmodells;
- Ansteuern von zumindest einer Funktionseinheit (32, 34, 36, 38) des Kraftwagens (10) unter Berücksichtigung der ermittelten Raumlage der zweiten Körperpartie (26, 28);
**dadurch gekennzeichnet, dass**
- eine Raumlage einer in dem Erfassungsbereich (16) angeordneten ersten Schulter (18) des Fahrzeuginsassen (20) erfasst und unter Berücksichtigung der erfassten Raumlage der ersten Schulter (18) sowie des anthropometrischen Datenmodells
• eine Raumlage einer zweiten Schulter (26) des Fahrzeuginsassen (20) ermittelt sowie eine Höhenverstellungseinrichtung (32) eines Anschnallgurts des Kraftwagens (10) unter Berücksichtigung der ermittelten Raumlage der zweiten Schulter (26) automatisch angesteuert wird;
• und/oder eine Raumlage eines Kopfs (28) des Fahrzeuginsassen (20) ermittelt und unter Berücksichtung der ermittelten Raumlage des Kopfs (28) eine Klimaanlage (36) des Kraftwagens (10) automatisch parametrisiert und/oder eine Höhenverstellungseinrichtung (38) einer Kopfstütze (42) des Kraftwagens (10) automatisch angesteuert wird.

2. Verfahren nach Anspruch 1,
**dadurch gekennzeichnet, dass**
eine Auslösung eines Airbags (34), insbesondere eines Kopfairbags, unter Berücksichtigung der ermittelten Raumlage des Kopfs (28) parametrisiert wird.

3. Verfahren nach Anspruch 2,
**dadurch gekennzeichnet, dass**
der Airbag (34) unter Berücksichtung der ermittelten Raumlage des Kopfs (28) verzögert gegenüber einer Standardeinstellung ausgelöst oder gar nicht ausgelöst wird.

4. Verfahren nach einem der vorhergehenden Ansprüche,
**dadurch gekennzeichnet, dass**
eine Temperatur- und/oder Strömungsgeschwindigkeitsverteilung der Klimaanlage (36) parametrisiert wird.

5. System (12) zum Betreiben eines Kraftwagens (10), mit:
- einer Erfassungseinrichtung (14), welche dazu ausgelegt ist, eine Raumlage von zumindest einer ersten in einem Erfassungsbereich der Erfassungseinrichtung (14) angeordneten Körperpartie (18) eines Fahrzeuginsassen (20) gegenüber dem Kraftwagen (10) zu ermitteln;
- einer Speichereinrichtung (22), welche dazu ausgelegt ist, ein anthropometrisches Datenmodell, welches Daten bezüglich der Abmaße von vorbestimmten Körperpartien eines Menschen und der Positionierung der Körperpartien zueinander umfasst, bereitzustellen;
- einer Datenverarbeitungseinrichtung (24), welche dazu ausgelegt ist, eine Raumlage von zumindest einer zweiten Körperpartie (26, 28) desselben Fahrzeuginsassen (20), welche außerhalb des Erfassungsbereichs (16) der Erfassungseinrichtung (14) angeordnet ist, unter Berücksichtigung der erfassten Raumlage der ersten Körperpartie (18) und des anthropometrischen Datenmodells zu ermitteln;
- einer Steuereinrichtung (30), welche dazu ausgelegt ist, zumindest eine Funktionseinheit (32, 34, 36, 38) des Kraftwagens (10) unter Berücksichtigung der ermittelten Raumlage der zweiten Körperpartie (26, 28) anzusteuern;
**dadurch gekennzeichnet, dass**
- das System (10) dazu ausgelegt ist, eine Raumlage einer in dem Erfassungsbereich (16) angeordneten ersten Schulter (18) des Fahrzeuginsassen (20) zu erfassen und unter Berücksichtigung der erfassten Raumlage der ersten Schulter (18) sowie des anthropometrischen Datenmodells
• eine Raumlage einer zweiten Schulter (26) des Fahrzeuginsassen (20) zu ermitteln sowie eine Höhenverstellungseinrichtung (32) eines Anschnallgurts des Kraftwagens (10) unter Berücksichtigung der ermittelten Raumlage der zweiten Schulter (26) automatisch anzusteuern;
• und/oder eine Raumlage eines Kopfs (28) des Fahrzeuginsassen (20) zu ermitteln und unter Berücksichtung der ermittelten Raumlage des Kopfs (28) eine Klimaanlage (36) des Kraftwagens (10) automatisch zu parametrisieren und/oder eine Höhenverstellungseinrichtung (38) einer Kopfstütze (42) des Kraftwagens (10) automatisch anzusteuern.

## Claims

1. Method for operating a motor vehicle (10), having the steps of:
- detecting a spatial position of at least a first body part (18) of a vehicle occupant (20) which is arranged in a detection range (16) of a detection device (14) of the motor vehicle (10) with respect to the motor vehicle (10) by means of the detection device (14);
- providing an anthropometric data model which comprises data relating to the dimensions of predetermined body parts of a person and the positioning of the body parts with respect to each other;
- establishing a spatial position of at least a second body part (26, 28) of the same vehicle occupant (20) which is arranged outside the detection range (16) of the detection device (14), taking into account the detected spatial position of the first body part (18) and the anthropometric data model;
- controlling at least one functional unit (32, 34, 36, 38) of the motor vehicle (10) taking into account the established spatial position of the second body part (26, 28);
**characterised in that**
- a spatial position of a first shoulder (18) of the vehicle occupant (20) which is arranged in the detection range (16) is detected and, taking into account the detected spatial position of the first shoulder (18) and the anthropometric data model,
• a spatial position of a second shoulder (26) of the vehicle occupant (20) is established and a height adjustment device (32) of a seat belt of the motor vehicle (10) is automatically controlled, taking into account the established spatial position of the second shoulder (26);
• and/or a spatial position of a head (28) of the vehicle occupant (20) is established and taking into account the established spatial position of the head (28) an air conditioning unit (36) of the motor vehicle (10) is automatically parameterised and/or a height adjustment device (38) of a headrest (42) of the motor vehicle (10) is automatically controlled.

2. Method according to claim 1,
**characterised in that**
an activation of an airbag (34), in particular a head airbag, is parameterised taking into account the established spatial position of the head (28).

3. Method according to claim 2,
**characterised in that**
the airbag (34), taking into account the established spatial position of the head (28), is activated in a delayed manner with respect to a standard setting or is not activated at all.

4. Method according to any one of the preceding claims,
**characterised in that**
a temperature and/or flow speed distribution of the air conditioning unit (36) is parameterised.

5. System (12) for operating a motor vehicle (10), having:
- a detection device (14) which is configured to establish a spatial position of at least a first body part (18) of a vehicle occupant (20) which is arranged in a detection range of the detection device (14) with respect to the motor vehicle (10);
- a storage device (22) which is configured to provide an anthropometric data model which comprises data relating to the dimensions of predetermined body parts of a person and the positioning of the body parts with respect to each other;
- a data processing device (24) which is configured to establish a spatial position of at least a second body part (26, 28) of the same vehicle occupant (20) which is arranged outside the detection range (16) of the detection device (14), taking into account the detected spatial position of the first body part (18) and the anthropometric data model;
- a control device (30) which is configured to control at least one functional unit (32, 34, 36, 38) of the motor vehicle (10) taking into account the established spatial position of the second body part (26, 28);
**characterised in that**
- the system (10) is configured to detect a spatial position of a first shoulder (18) of the vehicle occupant (20) arranged in the detection range (16) and, taking into account the detected spatial position of the first shoulder (18) and the anthropometric data model,
• to establish a spatial position of a second shoulder (26) of the vehicle occupant (20) and automatically to control a height adjustment device (32) of a seat belt of the motor vehicle (10) taking into account the established spatial position of the second shoulder (26);
• and/or to establish a spatial position of a head (28) of the vehicle occupant (20) and, taking into account the established spatial position of the head (28), automatically to parameterise an air conditioning unit (36) of the motor vehicle (10) and/or automatically to control a height adjustment device (38) of a headrest (42) of the motor vehicle (10).

## Revendications

1. Procédé pour faire fonctionner un véhicule automobile (10), avec les étapes :
- détection d'une position spatiale d'au moins une première partie de corps (18), placée dans une zone de détection (16) d'un dispositif de détection (14) du véhicule automobile (10), d'un occupant de véhicule (20) par rapport au véhicule automobile (10) au moyen du dispositif de détection (14) ;
- fourniture d'un modèle de données anthropométriques, qui comprend des données concernant les dimensions de parties de corps prédéterminées d'une personne et le positionnement des parties de corps les unes par rapport aux autres ;
- détermination d'une position spatiale d'au moins une deuxième partie de corps (26, 28) du même occupant de véhicule (20), laquelle est placée en dehors de la zone de détection (16) du dispositif de détection (14), en tenant compte de la position spatiale détectée de la première partie de corps (18) et du modèle de données anthropométriques ;
- commande d'au moins une unité fonctionnelle (32, 34, 36, 38) du véhicule automobile (10) en tenant compte de la position spatiale prédéterminée de la deuxième partie de corps (26, 28) ;
**caractérisé en ce que**
- une position spatiale d'une première épaule (18), placée dans la zone de détection (16), de l'occupant de véhicule (20) est détectée et, en tenant compte de la position spatiale détectée de la première épaule (18) ainsi que du modèle de données anthropométriques,
• une position spatiale d'une deuxième épaule (26) de l'occupant de véhicule (20) est déterminée et un dispositif de réglage en hauteur (32) d'une ceinture de sécurité du véhicule automobile (10) est commandé automatiquement en tenant compte de la position spatiale déterminée de la deuxième épaule (26) ;
• et/ou une position spatiale d'une tête (28) de l'occupant de véhicule (20) est déterminée et, en tenant compte de la position spatiale déterminée de la tête (28), une installation de climatisation (36) du véhicule automobile (10) est automatiquement paramétrée et/ou un dispositif de réglage en hauteur (38) d'un appui-tête (42) du véhicule automobile (10) est commandé automatiquement.

2. Procédé selon la revendication 1, **caractérisé en ce qu'**un déclenchement d'un airbag (34), en particulier d'un airbag de tête, est paramétré en tenant compte de la position spatiale déterminée de la tête (28).

3. Procédé selon la revendication 2, **caractérisé en ce que**, en tenant compte de la position spatiale déterminée de la tête (28), l'airbag (34) est déclenché avec un certain retard par rapport à un réglage standard ou n'est pas déclenché du tout.

4. Procédé selon l'une des revendications précédentes, **caractérisé en ce qu'**une répartition de température et/ou de vitesse de flux de l'installation de climatisation (36) est paramétrée.

5. Système (12) pour faire fonctionner un véhicule automobile (10), avec :
- un dispositif de détection (14), qui est conçu pour déterminer une position spatiale d'au moins une première partie de corps (18), placée dans une zone de détection d'un dispositif de détection (14), d'un occupant de véhicule (20) par rapport au véhicule automobile (10) ;
- un dispositif de mémorisation (22), qui est conçu pour fournir un modèle de données anthropométriques, qui comprend des données concernant les dimensions de parties de corps prédéterminées d'une personne et le positionnement des parties de corps les unes par rapport aux autres ;
- un dispositif de traitement de données (24), qui est conçu pour déterminer une position spatiale d'au moins une deuxième partie de corps (26, 28) du même occupant de véhicule (20), laquelle est placée en dehors de la zone de détection (16) du dispositif de détection (14), en tenant compte de la position spatiale détectée de la première partie de corps (18) et du modèle de données anthropométriques;
- un dispositif de commande (30), qui est conçu pour commander au moins une unité fonctionnelle (32, 34, 36, 38) du véhicule automobile (10) en tenant compte de la position spatiale prédéterminée de la deuxième partie de corps (26, 28) ;
**caractérisé en ce que**
- le système (10) est conçu pour détecter une position spatiale d'une première épaule (18), placée dans la zone de détection (16), de l'occupant de véhicule (20) et pour, en tenant compte de la position spatiale détectée de la première épaule (18) ainsi que du modèle de données anthropométriques,
-- déterminer une position spatiale d'une deuxième épaule (26) de l'occupant de véhicule (20) et commander automatiquement un dispositif de réglage en hauteur (32) d'une ceinture de sécurité du véhicule automobile (10) en tenant compte de la position spatiale déterminée de la deuxième épaule (26) ;
-- et/ou déterminer une position spatiale d'une tête (28) de l'occupant de véhicule (20) et, en tenant compte de la position spatiale déterminée de la tête (28), paramétrer automatiquement une installation de climatisation (36) du véhicule automobile (10) et/ou commander automatiquement un dispositif de réglage en hauteur (38) d'un appui-tête (42) du véhicule automobile (10).
